# EUROPÄISCHE PATENTSCHRIFT

(11) **EP 2 596 897 B1**
(45) Veröffentlichungstag und Bekanntmachung des Hinweises auf die Patenterteilung: **19.03.2014**
(21) Anmeldenummer: 12007752.4
(22) Anmeldetag: 16.11.2012
(51) Int. Cl.: B23K 11/11, B23K 11/30, B23K 11/31

(54) **Punktschweißvorrichtung, insbesondere zur Verwendung im Karosseriebau der Kfz-Industrie**
Spot welding device, in particular for use in bodywork construction in the motor vehicle industry
Dispositif de soudage par point, notamment pour l'utilisation dans le montage de carrosserie dans l'industrie automobile

(30) Priorität: 23.11.2011 DE 102011119317
(43) Veröffentlichungstag der Anmeldung: 29.05.2013
(73) Patentinhaber: Tünkers Maschinenbau GmbH, 40880 Ratingen (DE)
(72) Erfinder: Tünkers, André, 40489 Düsseldorf (DE); Tünkers, Olaf, 40885 Ratingen (DE)
(74) Vertreter: Beyer, Rudi

(56) Entgegenhaltungen:
- DE-A1-102010 024 569
- US-A- 4 966 506
- US-A1- 2008 078 749

## Beschreibung

Die Erfindung betrifft eine Punktschweißvorrichtung, insbesondere zur Verwendung im Karosseriebau der Kfz-Industrie.

### Stand der Technik

Punktschweißvorrichtungen sind in mannigfaltigen Konstruktionen vorbekannt, zum Beispiel als sogenannte Maschinenschweißzangen oder auch maschinell betätigte Schweißzangen. Bei derartigen Punktschweißvorrichtungen werden die miteinander dauerhaft zu verbindenden Werkstücke, insbesondere blechförmige Teile, zwischen Schweißelektroden eingeklemmt und miteinander dauerhaft durch Schweißpunkte verbunden. Die aufzuwendenden Anpresskräfte an den Elektroden können sich im Karosseriebau auf mehrere hundert Kilogramm Anpressdruck, zum Beispiel auf 300 bis 700 kg Anpressdruck, belaufen. Besonders hohe Anpressdrucke werden beim Schweißen von Aluminiumblechen benötigt.

Bei den bisher bekannten Punktschweißvorrichtungen müssen die Schweißelektroden nach einiger Betriebsdauer ausgewechselt und bearbeitet werden, da durch den Schweißabbrand Ablagerungen entstehen, die kein reproduzierbares Schweißbild mehr erlauben. Das Bearbeiten geschieht durch Abfräsen, Abbürsten oder dergleichen. Durch das Aus- und Einbauen der Schweißelektroden entstehen Stillstandszeiten und damit unerwünschte Kosten. Deshalb hat man schon vorgeschlagen, miteinander zu verbindende Bauteile konventionell miteinander zu verbinden, zum Beispiel durch Clinchen, durch Nietverbindungen, durch Schraubverbindungen, wodurch die Konstruktionen allerdings teurer werden.

Die DE 197 24 371 C1 zeigt eine Vorrichtung zum programmgesteuerten Wechseln von Schweißelektroden von einem zu diesen koaxialen Schweißwerkzeugschaft an einem Punktschweißroboter, der den Schweißwerkzeugschaft mit der Schweißelektrode in eine Elektrodenablösevorrichtung verbringt und nach dem Ablösen der Schweißelektrode in eine neue Schweißelektrode aus einem Zuführmagazin eindrückt, wobei die Ablösevorrichtung aus einer kraftschlüssigen Klemmvorrichtung für die jeweils eingebrachte Elektrode besteht, wobei die Klemmvorrichtung mit einem Getriebe verbunden ist, das mindestens eine axiale oder laterale oder zirkulare Roboterbewegung des Schweißwerkzeugschaftes in eine relative Drehung der Elektrode gegenüber dem Werkzeugschaft umsetzt und diese dadurch von diesem löst, und die Roboterbewegung weiter die Klemmvorrichtung öffnet und so die gelöste Elektrode freigibt, und eine weitere Roboterbewegung die Klemmvorrichtung in eine vorgegebene Ausgangsstellung zurückführt. Die Klemmvorrichtung besteht aus zwei die Elektrode kraftschlüssig, senkrecht zur Elektrodenachse angreifenden, im Wesentlichen parallelen Klemmbacken, die beim Antrieb des Getriebeantriebsgliedes durch den in die Öffnung eingeführten Schweißwerkzeugschaft parallel und in entgegengesetzten Richtungen sich zueinander bewegen, wobei die Elektrode abgedreht wird. Es wird vorgeschlagen, das Getriebe aus einem zweiarmigen Hebel herzustellen, dessen Enden jeweils über Lenker mit den Klemmbacken verbunden sind, und dessen Mittelpunkt mit dem Getriebeantriebsglied gelenkig verbunden ist, das eine Öffnung aufweist, die im Betrieb vom Werkzeugschaft in loser Passung durchsetzt ist. Das Getriebe besteht aus einem an dem Getriebeantriebsglied drehbar gelagerten Zahnritzel, das in Zahnungen der Klemmbacken kämmt, von denen eine in der Antriebsrichtung festgelegt und dies andere verschieblich gelagert ist. Die Vorrichtung ist dadurch gekennzeichnet, dass mindestens eine der Klemmbacken in Richtung auf die Elektrode federbelastet beaufschlagt ist und mindestens eine der Klemmbacken an ihrer Klemmfläche eine Einlaufschräge bis auf eine eingangsseitige Weite, die größer als der maximal zu erfassende Elektrodendurchmesser ist, aufweist, die sich in der Ausgangsstellung unter der Öffnung befindet. Des Weiteren ist diese vorbekannte Vorrichtung dadurch gekennzeichnet, dass die Klemmbacken der Klemmvorrichtung in axialer Richtung Einlaufschrägen aufweist und achsparallel zur Elektrodenachse um eine Schwenkachse schwenkbar gelagert ist und der Werkzeugschaft robotergesteuert zuerst die Elektrode axial zwischen die Klemmbacken schiebt, dann eine Schwenkbewegung um die Schwenkachse ausführt, dann axialbewegt die Klemmbacken öffnet und lateral zurückschwenkt. Die Klemmvorrichtung ist zu der Schwenkachse verschieblich gelagert, wodurch nur eine Richtungskomponente der robotergesteuerten Bewegung des Werkzeugschaftes die Schwenkbewegung um die Schwenkachse ausführt. Im Übrigen sind die Klemmbacken als Zylinderschalen mit einem konischen Einlauf ausgebildet, die außenseitig in einer Schraubenwendel verdrehbar gehalten sind und axial mit einer Rückstellfeder federbelastet in Richtung auf den Werkzeugschaft gegen einen Anschlag gehalten sind und axial gegen die Rückstellfeder in eine Lösestellung verschoben auf einen Spreitzeranschlag treffen, der die Klemmbacken soweit auseinander sperrt, dass die gelöste Elektrode austreten kann. Die Klemmbacken sind einstückig an einem längsgeschlitzen Federstahlzylinder ausgebildet.

Aus der DE 10 2010 024 569 A1 ist ein Verfahren zum Schweißen einer Vielzahl von Aluminium an Aluminium-Schweißverbindungen und einer Vielzahl von Stahl an Stahl-Widerstandselektrodenschweißverbindungen unter Verwendung desselben Schweißgerätes vorbekannt, welches umfasst, dass: ein Widerstandspunktschweißgerät mit einem Paar Schweißelektroden, die einen Elektrodenflächenkrümmungsradius im Bereich zwischen 20 Millimeter und 40 Millimeter aufweisen, vorgesehen wird und die Elektrodenfläche mit einer Rauheit im Bereich von 2 Mikrometer bis 50 Mikrometer strukturiert wird; zuerst eine Reihe von Aluminium an Aluminium-Schweißverbindungen hergestellt wird; nach Fertigstellung der Aluminium an Aluminium-Schweißverbindungen danach eine Reihe von Stahl an Stahl-Schweißverbindungen hergestellt wird; nach Fertigstellung der Stahl an Stahl-Schweißverbindungen danach die Schweißelektroden gereinigt werden, um eine jegliche Ansammlung von Aluminium auf den Elektroden zu entfernen, und die Elektrodenfläche auf die Rauheit von 2 Mikrometer bis 50 Mikrometer restrukturiert wird, bevor als Nächstes eine neue Reihe von Aluminium an Aluminium-Schweißverbindungen begonnen wird. Die Elektroden sind aufgepilzt, wobei nach Fertigstellung der Stahl an Stahl-Schweißverbindungen die Elektroden gemessen werden, um das Ausmaß der Aufpilzung der Elektroden zu vermitteln, und wenn eine Aufpilzung ermittelt wird, die Elektroden dann wieder zugerichtet werden, bevor die Elektroden restrukturiert werden. Das Reinigen und Restrukturieren soll durch eine rotierende Schleifscheibe erfolgen, wobei die rotierende Schleifscheibe ein flexibles Schleifmaterial ist, das sich biegt, um sich der Krümmung der Elektrodenfläche anzupassen. Der Schweißzangenarm ist C-förmig gestaltet, so dass die gegenüberliegenden Elektroden dazu gebracht werden können, gegenüberliegende Seiten der Metalltafeln zu tragen und auf diese zu pressen. Eine der Elektroden ist an einem Schaft befestigt, der in eine Halterung eingesetzt ist, welcher an einem feststehenden Arm des Schweißzangenarmes angebracht ist. Die andere Elektrode ist an einem Schaft befestigt und in einer weiteren Halterung eingesetzt, die auf einem Luftzylinder- oder Servomotor getragen ist. der Luftzylinder- oder Servomotor ist geeignet, die Elektrode axial in einen Klemmeingriff mit der Außenfläche der Tafel zu bewegen. Eine Hochdruckquelle liefert Luft über einen programmierbaren Luftregler über eine Luftleitung an einen Zylinder, um eine Klemmkraft bereit zu stellen. Alternativ stellt eine Servomotorsteuerung Strom und Spannung an dem Servomotor bereit, um das Einklemmen vorzusehen. Während einer Punktschweißabfolge rückt die zeitgerechte Anwendung von Druckluft auf den Zylinder oder die Bewegung des Servomotors die Halterung vor, so dass die Elektrode die Bleche mit einer vorbestimmten Kraft gegen die feststehende Elektrode presst.

Aus der US 2008/0078749 A1 ist eine elektrische Widerstandselektrode vorbekannt, die an ihrem Endabschnitt konisch zulaufend gebildet ist und hier konzentrische Absätze aufweist.

Die US 4,966,506 zeigt eine Vorrichtung zum Konfigurieren von elektrischen Widerstandschweißelektroden.

### Aufgabe

Der Erfindung liegt die Aufgabe zugrunde, eine Punktschweißvorrichtung, insbesondere in Form sogenannter Schweißzangen oder Maschinenschweißzangen zu schaffen, die sich mit besonderem Vorteil zum Verbinden von blechförmigen Bauteilen im Karosseriebau der Kfz-Industrie einsetzen lassen und die es auch ermöglichen, Aluminiumbleche in größeren Stückzahlen zu schweißen, ohne dass - wie bisher - die Elektrodenkappen nach relativ kurzer Betriebsdauer ausgebaut und/oder gereinigt werden müssten.

### Lösung

Die Aufgabe wird durch die Merkmale des **Patentanspruches 1** gelöst.

### Einige Vorteile

Durch die Erfindung ist es möglich, die betreffende Elektrode jeweils um ihre Längsachse um ein begrenztes Winkelmaß in entgegengesetzten Richtungen zu drehen, was unter Betriebsdruck oder einem geringeren oder erheblich geringeren Anfangsdruck geschehen kann, um den Abbrand jeweils zuverlässig zu entfernen. Hierzu können die Elektroden gegeneinander gepresst werden. Bedarfsweise ist es aber auch möglich, nur die bewegliche Elektrode auf ein Werkstück oder dergleichen aufzusetzen, dann zu drehen, um den an ihr befindlichen Abbrand zu entfernen. Dadurch brauchen die Schweißelektroden nicht mehr ausgebaut und separat gereinigt zu werden, so dass die bisher lästigen und kostspieligen Stillstandszeiten entfallen. Auf diese Weise ist es außerdem möglich, nicht nur qualitativ hochwertige Schweißverbindungen zu garantieren, sondern insbesondere auch reproduzierbare Schweißpunkte zu gewährleisten.

### Weitere erfinderische Ausgestaltungen

Weitere erfinderische Ausgestaltungen sind in den **Patentansprüchen 2** bis **10** beschrieben.

Die Lösung nach **Patentanspruch 2** beschreibt die Zuordnung eines Kraftantriebes, durch den die Kappe gegenüber dem Schaft um ein begrenztes Winkelmaß in entgegengesetzten Richtungen um einen spitzen Winkel drehbar angeordnet ist. Hierzu kann die Kappe in Drehlagern, zum Beispiel Nadellagern oder dergleichen leicht drehbar auf einem Schaftteil angeordnet sein. Als Kraftantriebe können alle möglichen geeigneten Antriebe in Betracht kommen, zum Beispiel Linearantriebe, Elektroantriebe oder Hydraulik- oder Pneumatikzylinder (Kolben-Zylinder-Einheiten) sowie rotativ angetriebene Vorrichtungen elektrisch, pneumatisch oder hydraulisch arbeiten und die zum Beispiel raumsparend direkt dem Schaft zugeordnet sein können.

Bei der Lösung nach **Patentanspruch 3** treibt der motorische Kraftantrieb den Schaft an. Zu diesem Zweck kann der Schaft selbst auf einem Arm, zum Beispiel Teile eines Roboterarms, drehbar angeordnet sein, vorzugsweise ebenfalls leichtgängig in Wälzlagern wie Nadellager, Kugellager oder dergleichen, so dass der Kraftantrieb den betreffenden Schaft in entgegengesetzten Richtungen, vorzugsweise um einen spitzen Winkel antreiben kann, um den Abbrand der Kappe selbst und/oder auch an der mit dieser zusammenwirkenden Gegenelektrode und der dort vorgesehenen Kappe zu entfernen.

Bei der Ausführungsform nach **Patentanspruch 4** werden die Kappe und/oder der Schaft weg-hub-gesteuert oder dreh-kraft-gesteuert unter eigenem Kraftschluss, zum Beispiel an den miteinander zu schweißenden Werkstücken und/oder gegen eine andere Elektrode, durch den motorischen Kraftantrieb bewegt und dadurch der Abbrand entfernt. Der Weg oder die Drehkraft können gemessen werden, zum Beispiel über die Anpresskraft oder das Drehmoment, um ein schnelles Entfernen des Abbrandes zu ermöglichen, andererseits aber auch sicherzustellen, dass die Elektroden nicht beschädigt werden.

Die Ausführungsform nach **Patentanspruch 5** ist dadurch gekennzeichnet, dass mindestens eine der beiden Kappen und/oder der Schaft um einen spitzen Winkel von 15 bis 80 Grad, vorzugsweise in entgegengesetzten Drehrichtungen, um die jeweilige Längsachse durch den motorischen Kraftantrieb drehbar ist. Bei der Ausführungsform nach **Patentanspruch 6** ist mindestens eine der beiden Kappen und/oder der Schaft um einen spitzen Winkel um größer als Null Grad bis 15 Grad, vorzugsweise in entgegengesetzten Drehrichtungen, um die jeweilige Längsachse durch den motorischen Kraftantrieb drehbar.

Derartige Drehwinkel sind bei laufendem Betrieb schnell auszuführen, so dass Totzeiten auf ein Minimum reduziert werden.

In **Patentanspruch 7** ist eine bevorzugte Ausführungsform der Erfindung beschrieben.

**Patentanspruch 8** beschreibt eine Punktschweißvorrichtung, bei welcher die Drehbewegung der Kappe durch eine Kulisse gesteuert wird. Auf diese Weise kann man den Druck, mit dem die Elektrode auf ein Widerlager aufsetzt dazu verwenden, um sie gegen die Rückstellkraft eines Druckfederelementes in Drehbewegung zu setzen.

**Patentanspruch 9** beschreibt eine konstruktiv einfache Lösung für den Drehantrieb, während **Patentanspruch 10** eine weitere bevorzugte Ausführungsform der Erfindung beinhaltet.

In der Zeichnung ist die Erfindung - teils schematisch - an zwei Ausführungsbeispielen veranschaulicht. Es zeigen:
- Fig. 1: einen Teil eines Armes mit einem als Schweißelektrodenhalter ausgebildeten Schaft mit als Schweißelektrode ausgebildeter Kappe und einem motorischen Antrieb, gebildet durch eine Kolben-Zylinder-Einheit;
- Fig. 2: eine Stirnansicht zu Fig. 1, wobei die Kolben-Zylinder-Einheit im Längsschnitt dargestellt ist;
- Fig. 3: eine weitere Ausführungsform der Erfindung, wobei die Kappe gegen die Rückstellkraft eines Federelementes eingefahren ist;
- Fig. 4: eine Darstellung entsprechend Fig. 3, wobei die Kappe durch federnde Rückstellkraft des Federelementes selbsttätig ausgefahren ist und in dieser Stellung auch federnd gehalten ist;
- Fig. 5: eine Einzelheit aus den Fig. 3 und 4;
- Fig. 6: einen Schnitt nach der Linie VI der Fig. 5, in größerem Maßstab;
- Fig. 7: einen Querschnitt nach der Linie VII - VII der Fig. 3, in größerem Maßstab;
- Fig. 8: eine Einzelheit aus den Fig. 3 und 4, in größerem Maßstab, abgebrochen dargestellt und
- Fig. 9: einen Querschnitt nach der Linie IX - IX der Fig. 4.

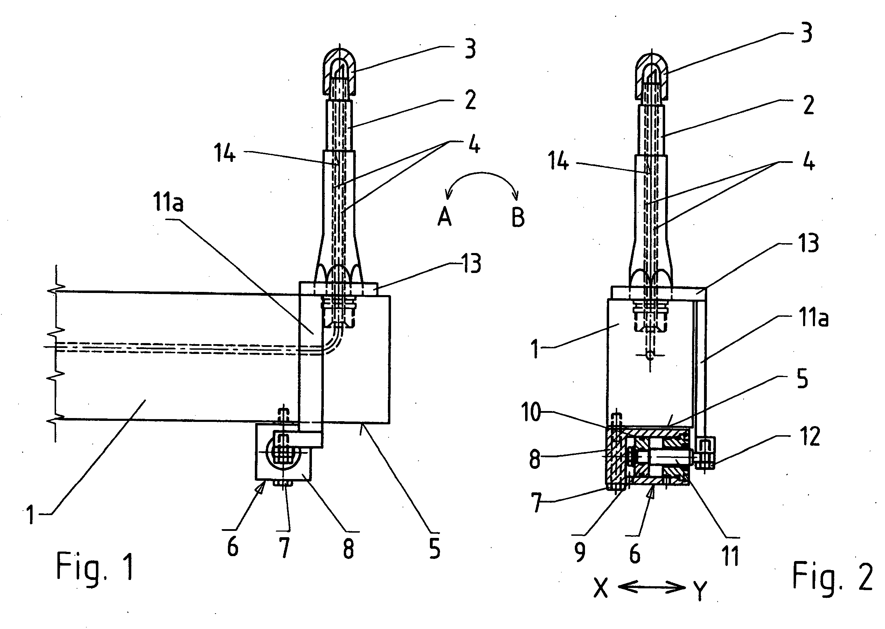

Bei dem aus den Fig. 1 und 2 ersichtlichen Ausführungsbeispiel ist mit dem Bezugszeichen 1 ein Teil eines Armes bezeichnet, der zum Beispiel zu einer Maschinenschweißzange oder einem Roboterarm gehören kann. An dem Arm 1 ist ein als Elektrodenhalter ausgebildeter Schaft 2 auswechselbar angeordnet, der an seinem Ende eine auswechselbare als Elektrode ausgebildete Kappe 3 aus einem elektrisch leitfähigen Material, insbesondere aus einer Kupferlegierung, aufweist, die mit dem Schaft 2, zum Beispiel durch Schraubgewinde oder dergleichen, funktionell einstückig, aber auswechselbar, verbunden ist. Im Inneren des Armes 1 und im Inneren des Schaftes 2 verlaufen Leitungen 4 zum Heranführen von Kühlflüssigkeit, insbesondere von Wasser und elektrische Leitungen für den Schweißstrom.

Die mit der Kappe 3 zusammenwirkende Gegenelektrode der betreffenden z. B. als Schweißzange ausgebildeten Schweißvorrichtung zum Punktschweißen nicht dargestellter blechförmiger Werkstücke, insbesondere von Karosserieteilen im Kfz-Bau, ist aus Gründen der Vereinfachung nicht dargestellt.

An der Unterseite 5 des Armes 1 ist ein motorischer Antrieb angeordnet, der in der Zeichnung insgesamt mit dem Bezugszeichen 6 bezeichnet ist. Der motorische Antrieb 6 ist in geeigneter Weise, bei der dargestellten Ausführungsform durch eine Schraube 7 oder durch mehrere Schrauben, mit dem Arm 1 auswechselbar und damit funktionell einstückig verbunden.

Der motorische Antrieb 6 weist einen Zylinder 8 auf, in dem ein Kolben 9 längsverschieblich und durch eine Dichtung 10 abgedichtet angeordnet ist. Der Kolben 9 ist mit einer Kolbenstange 11 verbunden, die aus dem Zylinder 8 abgedichtet herausgeführt ist und die an ihrem äußeren Endabschnitt ein Bauteil 11a aufweist, das über mindestens eine Schraube 12 oder dergleichen mit der Kolbenstange 11 gekuppelt ist.

Das Bauteil 11a besitzt einen Ansatz 13, der mit dem Schaft 2 getrieblich verbunden ist. Der Schaft 2 ist über ein geeignetes Lagerteil an dem Arm 1 um einen spitzen Winkel in entgegengesetzten Drehrichtungen um seine Längsachse 14 drehbeweglich entsprechend dem Hub des Kolbens 9 in Richtung X bzw. Y (Fig. 2) verbunden, so dass auch die mit dem Schaft 2 verbundene Kappe 3 entsprechend in Richtung A bzw. B um einen spitzen Winkel gedreht werden kann. Auf diese Weise lässt sich bei einem Zusammenführen der miteinander zusammenarbeitenden Elektroden und Bewegen von mindestens einer dieser Elektroden durch Kraftschluss und Drehen der betreffenden Kappe 3 der Abbrand an den beiden zusammenwirkenden Kappen bzw. Elektroden beseitigen, ohne dass die Kappe 3 und die Gegenelektrode/Kappe ausgebaut werden müssten. Eine entsprechende Drehbewegung kann auch unmittelbar beim Aufsetzen auf ein Werkstück erfolgen, und/oder durch Gegeneinanderfahren der miteinander zusammenwirkenden Kappen/Elektroden, zum Beispiel nach einem oder mehreren Schweißhüben. Die dafür erforderlichen Steuerbewegungen des motorischen Antriebes können in einer Speicher-Programmierbaren-Steuerung (SPS) einbezogen sein, die auch die jeweilige Frequenz der Hübe des Kolbens 9 des motorischen Antriebs 6, die Dauer der Drehbewegung in die eine oder andere Richtung und die Anzahl der Einschaltvorgänge des motorischen Antriebes 6 steuert. Zum Beispiel lassen sich die durch den Motor 6 bewirkten Reinigungsdrehbewegungen für die Kappen 3 jeweils nach einem Werkstückwechsel oder zwischen einem oder mehreren Schweißpunkten durchführen, je nachdem, welche Betriebsbedingungen vorliegen. Besonders beim Schweißen von Aluminium, wo besonders hohe Anpressdrücke erforderlich sind, die bis zu viele hundert bar, zum Beispiel 700 bar und mehr erreichen können, kann es erforderlich sein, die Reinigungsbewegungen der Kappe 3 öfter durchzuführen, um reproduzierbare Schweißverbindungen der blechförmigen Teile und damit einen vorgegebenen hohen Qualitätsstandard zu erfüllen.

Wie man erkennt, vergrößert der motorische Antrieb 6 die Querabmessungen der dargestellten Ausführungsform nur unwesentlich. Auch die Massenträgheitskräfte werden durch den relativ klein zu haltenden Antrieb in einer Länge von z.B. 55 mm entsprechend klein gehalten.

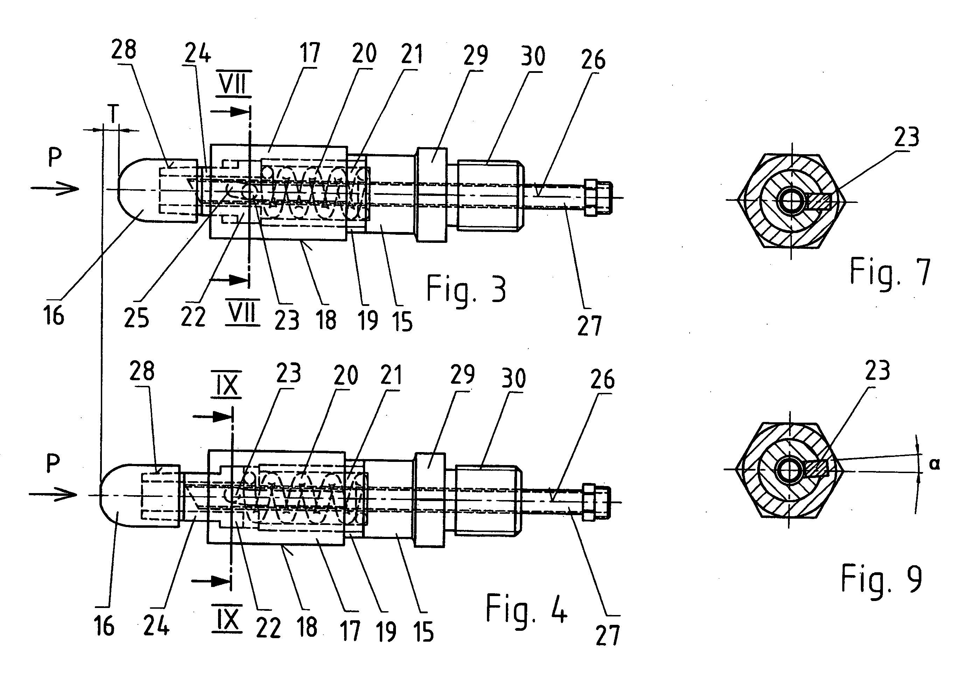

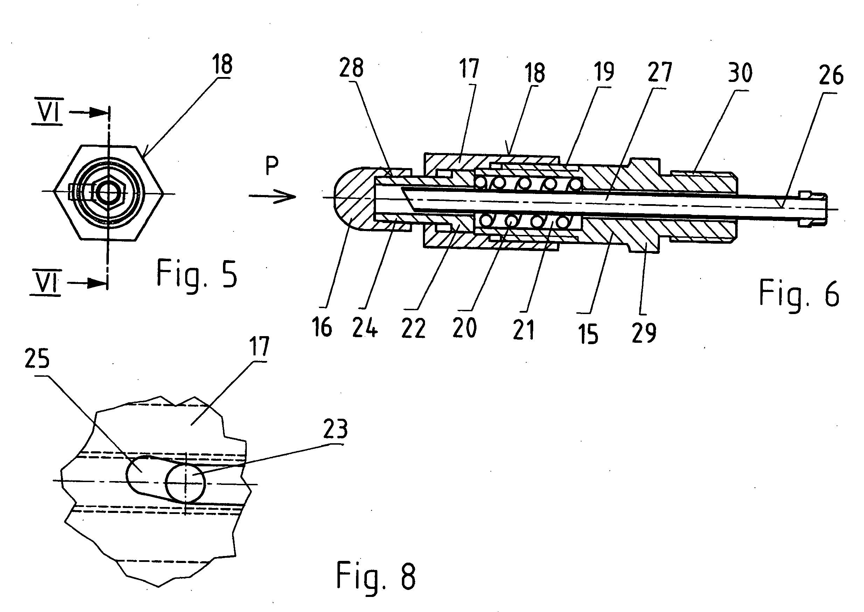

Bei der aus den Fig. 3 bis 8 ersichtlichen Ausführungsform ist der als Schaft ausgebildete Elektrodenhalter mit dem Bezugszeichen 15 bezeichnet, während eine auswechselbar als Kappe ausgebildete Elektrode aus elektrisch leitfähigem Material, insbesondere aus einer Kupferlegierung, das Bezugszeichen 16 aufweist. Innerhalb des Schaftes 15 können wie bei der Ausführungsform nach den Fig. 1 und 2 Stromleitungen und Leitungen für Kühlflüssigkeit, insbesondere Wasser, angeordnet sein. Wie aus Fig. 6 hervorgeht, ist auf dem Schaft 15 ein muffenförmiges Teil 17 angeordnet. Dieses muffenförmige Teil 17 besitzt Innengewinde, das auf einem mit Außengewinde versehenen Längenabschnitt des Schaftes 15 mehr oder weniger weit in Längsachsrichtung aufgeschraubt werden kann. Das muffenförmige Teil 17 ist an seiner Außenseite 18 sechskantförmig ausgebildet, so dass mittels eines Schraubschlüssels das muffenförmige Teil 17 in Längsachsrichtung des Schaftes 15 verstellbar ist. Ineinandergreifende Gewinde sind mit dem Bezugszeichen 19 bezeichnet. Dadurch lässt sich die Vorspannkraft eines Druckfederelementes 20, das in einer Längsausnehmung 21 des Schaftes 15 angeordnet ist und sich mit dem einen Ende im Tiefsten der Längsausnehmung 21 des Schaftes 15 und mit dem anderen Ende gegen ein kolbenartiges Bauteil 22 unter federnder Rückstellkraft abstützt, verstellen. Die Kappe 16 ist mit einem in dem muffenförmigen Teil 17 angeordneten Längenabschnitt 24 und der als kolbenartiges Bauteil ausgebildeten Verdickung in dem muffenförmigen Teil 17 und einem diesem zugeordneten und als Querstift 23 ausgebildeten Kulissenfolgestift in einer als Kulisse 25 ausgebildeten Kulissenführungsausnehmung, z. B. des Bauteils 22, geführt, wobei der Kulissenfolgestift 23 ortsunbeweglich in dem muffenförmigen Teil 17 angeordnet ist. Der Steigungswinkel α der Kulisse 25 ist ein spitzer Winkel und kann z. B. unter 10°, vorzugsweise bei etwa nur 5°, liegen.

Wird auf die Kappe 16 eine Kraft P in ihrer Längsachse 26 des Schaftes 15 ausgeübt, die groß genug ist, die Vorspannkraft des Druckfederelementes 20 zu überwinden, so bewegt sich die Kappe 16 um das Maß T in das muffenförmige Teil 17 hinein, wobei durch die Zwangsführung des Querstiftes 23 in der Kulisse 25 sich die Kappe 16 um ihre Längsachse 26 um einen spitzen Winkel von z. B. 15° dreht. Fällt die Kraft P weg, so bewegt sich die Kappe 16 in entgegengesetzter Drehrichtung unter der Einwirkung des Druckfederelementes 20 aus dem hülsenförmigen Teil nach außen heraus (Fig. 4). Der Drehwinkel ist vorzugsweise in allen Fällen spitzwinklig und kann zum Beispiel ≥ Null bis 15 Grad, vorzugsweise 5 bis 45 Grad oder weniger, betragen. Dadurch wird beim Aufsetzen auf ein zu schweißendes Werkstück, oder aber beim Gegeneinanderfahren miteinander zusammenwirkender Kappen 16 (Elektroden) der an diesen haftende Abbrand entfernt. Bei 27 ist eine Leitung für Kühlflüssigkeit, insbesondere Wasser, vorgesehen, die koaxial zum Schaft 15 verläuft und die Kühlflüssigkeit bis zur Kappe 16 durch eine Bohrung in der Kappe unmittelbar zu dieser heranführt.

Das Bezugszeichen 28 bezeichnet einen Konus, während 29 ebenfalls einen Sechskant betrifft, mittels dessen sich unter Zuhilfenahme eines Werkzeuges der Schaft 15 einschrauben lässt. Zu diesem Zweck kann der Schaft bei 30 Gewinde aufweisen.

Statt den Schaft 2 der Ausführungsform nach Fig. 1 und 2 drehanzutreiben, kann der motorische Antrieb auch die Kappe 3 selbst direkt drehantreiben. Zu diesem Zweck kann die Kappe 3 auf dem Schaft 2 durch ein Drehlager angeordnet sein, beispielsweise über Nadellager, Sprengring oder dergleichen. Die SPS kann auch die Aufsetzkraft steuern, mit der die Kappe 3 oder die Kappen gegeneinander oder gegen ein Werkstück gefahren werden, um den Abbrand zu entfernen.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichen

- 1: Arm
- 2: Schaft
- 3: Kappe
- 4: Leitungen
- 5: Unterseite
- 6: Antrieb, motorischer
- 7: Schraube
- 8: Zylinder
- 9: Kolben
- 10: Dichtung
- 11: Kolbenstange
- 11a: Bauteil
- 12: Schraube
- 13: Ansatz
- 14: Längsachse
- 15: Schaft, Elektrodenhalter
- 16: Kappe
- 17: Teil, muffenförmiges
- 18: Außenseite, sechseckförmige
- 19: Gewinde
- 20: Druckfederelement
- 21: Längsausnehmung
- 22: Bauteil
- 23: Querstift, Kulissenfolgestift
- 24: Längenabschnitt
- 25: Kulisse, Kulissenführung
- 26: Längsachse
- 27: Leitung
- 28: Konus
- 29: Sechskant
- 30: Gewinde

- A: Drehrichtung der Kappe 3
- B: " " " "
- X: Hubrichtung des Kolbens 9
- Y: " " " "
- T: Maß, Hub
- P: Kraft
- α: Steigungswinkel, spitzer Winkel

## Patentansprüche

1. Punktschweißvorrichtung, insbesondere zur Verwendung im Karosseriebau der Kfz-Industrie, mit als Schweißelektroden ausgebildeten Kappen (3), wobei die Kappen (3) jeweils an einem Schaft auswechselbar angeordnet sind, und wobei die Kappen (3) gegeneinander oder auf ein Werkstück aufsetzbar sind, **dadurch gekennzeichnet, dass** die Kappen (3) unter Betriebsdruck oder einem geringen oder erheblich geringeren Anfangsdruck zur Entfernung des Abbrandes um ein begrenztes Maß in entgegengesetzten Richtungen drehbar sind.

2. Punktschweißvorrichtung nach Anspruch 1, **dadurch gekennzeichnet, dass** die Kappe (3) an dem betreffenden Schaft (2) gegenüber diesem in entgegengesetzten Richtungen durch einen zugeordneten Kraftantrieb um einen spitzen Winkel um ihre Längsachse drehbeweglich angeordnet ist.

3. Punktschweißvorrichtung nach Anspruch 1, **dadurch gekennzeichnet, dass** der Schaft (2) durch einen zugeordneten motorischen Antrieb in entgegengesetzten Richtungen um einen spitzen Winkel drehbeweglich angeordnet ist.

4. Punktschweißvorrichtung nach Anspruch 1 oder einem der darauffolgenden Ansprüche, **dadurch gekennzeichnet, dass** die Kappe (3, 16) und/oder der Schaft (2, 15) drehkraftgesteuert unter eigenem Kraftschluss, z. B. an den miteinander zu schweißenden Werkstücken und/oder gegen eine andere Elektrode, durch den motorischen Kraftantrieb bewegbar ist.

5. Punktschweißvorrichtung nach Anspruch 1 oder einem der Ansprüche 2 bis 4, **dadurch gekennzeichnet, dass** mindestens eine der beiden Kappen (3, 16) und/oder der Schaft (2, 15) um einen spitzen Winkel von 15 bis 80 Grad, vorzugsweise in entgegengesetzten Drehrichtungen, um die jeweilige Längsachse (14) durch den motorischen Kraftantrieb drehbar ist.

6. Punktschweißvorrichtung nach Anspruch 1 oder einem der Ansprüche 2 bis 4, **dadurch gekennzeichnet, dass** mindestens eine der beiden Kappen (3, 16) und/oder der Schaft (2, 15) um einen spitzen Winkel um größer als Null Grad bis 15 Grad, vorzugsweise in entgegengesetzten Drehrichtungen, um die jeweilige Längsachse (14) durch den motorischen Kraftantrieb drehbar ist.

7. Punktschweißvorrichtung nach Anspruch 1 oder einem der Ansprüche 2 bis 6, **dadurch gekennzeichnet, dass** der Drehantrieb der Kappe (3) und/oder des Schaftes (2) durch eine abwechselnd beidseitig durch Druckmitteldruck, insbesondere pneumatisch oder hydraulisch, zu beaufschlagende Kolben-Zylinder-Einheit (6) gebildet ist, die den Schaft (2) oder einen Arm (1), an dem der Schaft (2) angeordnet ist, zugeordnet ist, und dass über ein Bauteil (11a) der Schaft (2, 15) oder die Kappe (3, 16) in entgegengesetzten Richtungen (A bzw. B) um einen spitzen Winkel in entgegengesetzten Richtungen, zum Beispiel weniger als 20 Grad, drehbar ist.

8. Punktschweißvorrichtung nach Anspruch 1 oder einem der Ansprüche 2 bis 7, **dadurch gekennzeichnet, dass** dem Gehäuse des Schaftes (15) oder der Kappe (16) eine als Kulissenführung ausgebildete Kulisse (25) zugeordnet ist, die mit einem um ein begrenztes Maß im wesentlichen in Längsachsrichtung des Schaftes (15) beweglichen, als Kulissenfolgestift ausgebildeten Querstift (23) die Drehbewegung der zugeordneten Kappe (16) in entgegengesetzten Richtungen gegen die Rückstellkraft eines Druckfederelementes (20) um einen spitzen Drehwinkel steuert.

9. Punktschweißvorrichtung nach Anspruch 8, **dadurch gekennzeichnet, dass** die Kulisse (25) unter einem spitzen Winkel zur Längsachse (26) des Schaftes (15) und der zugeordneten Kappe (16) verläuft, während der Querstift (23) orthogonal zur Längsachse (26) des Schaftes (15) und der Längsachse der Kappe (16) gleitbeweglich in der Kulisse (25) angeordnet ist.

10. Punktschweißvorrichtung nach Anspruch 8 oder 9, **dadurch gekennzeichnet, dass** der Drehantrieb für die Kappe (16) ein Druckfederelement (20) aufweist, das sich an einem Ende am Gehäuse des Schaftes (15) ggf. mittelbar und am anderen Ende an einer zylindrischen Verlängerung oder an einem damit zusammenwirkenden Bauteil der Kappe (16) unter z. B. einstellbarer Vorspannung ggf. mittelbar abstützt, wobei die Kulisse (25) an einem durch Schraubgewinde auf dem Schaft (15) angeordneten muffenförmigen Teil angeordnet ist, das ein Widerlager für das Federelement (20) bildet und durch mehr oder weniger weites Aufschrauben die Vorspannung des Druckfederelementes (20) steuert, und der Kulissenfolgestift (23) entweder einseitig oder auf beiden Seiten in einer etwa als Längsschlitz ausgebildeten Kulisse (25) formschlüssig eingreift, wodurch der Querstift (23) beim Aufsetzen der Kappe (16) gegen die Rückstellkraft des Druckfederelementes (20) verschiebbar ist, wobei durch die Kulisse (25) eine Drehbewegung der Kappe (16) um einen spitzen Winkel entsprechend dem Steigungswinkel der Kulisse (25) und bei Entlastung der Kappe (16) eine Rückdrehbewegung, ebenfalls um einen spitzen Winkel, zwangsläufig und damit selbsttätig erfolgt.

## Claims

1. Spot-welding device particularly for use in bodywork construction in the motor car industry, having tips (3) constructed as welding electrodes, where each of the tips (3) is exchangeably disposed on a shaft and where the tips (3) can be fitted on opposite each other or on a workpiece, **characterised in that** under operating pressure or a low or considerably lower initial pressure the tips (3) can be rotated a limited distance in opposite directions to remove the burnt-off contact material.

2. Spot-welding device in accordance with claim 1, **characterised in that** the tip (3) is disposed so that the tip can be rotated on the shaft (2) concerned a short angular distance relative to the shaft in opposite directions about its longitudinal axis by an assigned power drive.

3. Spot-welding device in accordance with claim 1, **characterised in that** the shaft (2) is disposed so that it can be moved a short angular distance in opposite directions by an assigned motor drive.

4. Spot-welding device in accordance with claim 1 or any one of the claims following it, **characterised in that** the tip (3, 16) and/or the shaft (2, 15) can be rotatably moved by a motor power drive under its own friction, e.g. on the workpieces to be welded together and/or towards another electrode.

5. Spot-welding device in accordance with claim 1 or any one of claims 2 to 4, **characterised in that** one or both of the two tips (3, 16) and/or the shaft (2, 15) can be rotated a short angular distance of between 15 and 80 degrees, preferably in opposite directions, about the respective longitudinal axis (14) by the motor power drive.

6. Spot-welding device in accordance with claim 1 or any one of claims 2 to 4, **characterised in that** one or both of the two tips (3, 16) and/or the shaft (2, 15) can be rotated a short angular distance of more than 0 up to 15 degrees, preferably in opposite directions, about the respective longitudinal axis (14) by the motor power drive.

7. Spot-welding device in accordance with claim 1 or any one of claims 2 to 6, **characterised in that** the rotary drive of the tip (3) and/or the shaft (2) is formed by a piston-and-cylinder unit (6) to which pressure is applied, particularly pneumatically or hydraulically, on either side alternately by a pressure medium and which is assigned to the shaft (2, 15) or an arm (1) on which the shaft (2) is disposed and **in that** the shaft (2, 15) or the tip (3, 16) can be rotated by means of a component part (11a) a short angular distance, for example, less than 20 degrees, in opposite directions (A or B).

8. Spot-welding device in accordance with claim 1 or any one of claims 2 to 7, **characterised in that** a motion link (25) constructed as a motion link guide is assigned to the housing of the shaft (15) or the tip (16) and by means of a transverse pin (23) which is constructed as a motion link follower pin and can be moved a limited distance essentially in the longitudinal direction of the shaft (15) can set the assigned tip (16) to move a short angular distance in opposite directions against the restorative force of a compression spring element (20).

9. Spot-welding device in accordance with claim 8, **characterised in that** the motion link (25) is set at a shallow angle to the longitudinal axis (26) of the shaft (15) and the assigned tip (16), while the tranverse pin (23) is slidably disposed in the motion link (25) at right angles to the longitudinal axis (26) of the shaft (15) and the longitudinal axis of the tip (16).

10. Spot-welding device in accordance with claim 8 or 9, **characterised in that** the rotary drive for the tip (16) incorporates a compression spring element (20) that is braced at one end, if possible, directly, against the housing of the shaft (15) and at the other end, if possible, directly, against a cylindrical extension of the tip (16) or a component of the tip (16) co-acting with it under e.g. adjustable pre-tension, where the motion link (25) is disposed by means of a screw thread on a sleeve-shaped part disposed on the shaft (15) which sleeve-shaped part forms a counter-stop for the spring element (20) on the shaft (15) and by screwing on a certain distance controls the pre-tension of the compression spring element (20), and the motion link follower pin (23) engages positively on one or both sides in a motion link (25) constructed as, for example, an elongated slot by means of which, when the tip (16) is fitted on, the transverse pin (23) can be displaced against the restorative force of the compression spring element (20), where by means of the motion link (25) the tip (16) is rotated a short angular distance depending on the pitch angle of the motion link (25) and, when the load is removed from the tip (16), is controlledly and therefore automatically rotated back a short angular distance.

## Revendications

1. Dispositif de soudage par points, à utiliser notamment dans la construction de carrosseries dans l'industrie automobile, avec des coiffes (3) configurées en électrodes de soudage, sachant que les coiffes sont agencées chacune interchangeables sur une tige, et sachant que les coiffes (3) peuvent être appliquées l'une contre l'autre ou sur une pièce, **caractérisé en ce qu'**il est possible, à la pression de service ou à une pression de départ faible ou considérablement plus faible, d'imprimer aux coiffes (3) une rotation d'un quantum limité en directions opposées pour retirer de ces coiffes (3) la matière consumée.

2. Dispositif de soudage par points selon la revendication 1, **caractérisé en ce que** la coiffe (3) est agencée sur la tige (2) concernée pour tourner selon un angle aigu autour de son axe longitudinal en directions opposées à cette tige sous l'action d'un entraînement qui lui est affecté.

3. Dispositif de soudage par points selon la revendication 1, **caractérisé en ce que** la tige (2) est agencée pour tourner selon un angle aigu en directions opposées sous l'action d'un entraînement motorisé qui lui est affecté.

4. Dispositif de soudage par points selon la revendication 1 ou l'une des revendications suivantes, **caractérisé en ce que** la coiffe (3, 16) et/ou la tige (2, 15) sont déplaçables, par l'entraînement motorisé, pilotées par la force de rotation sous leur propre adhérence de forces, par exemple jusque contre les pièces à souder ensemble et/ou contre une autre électrode.

5. Dispositif de soudage par points selon la revendication 1 ou l'une des revendications 2 à 4, **caractérisé en ce qu'**au moins l'une des deux coiffes (3, 16) et/ou la tige (2, 15) peuvent tourner selon un angle aigu de 15 à 80 degrés sous l'action de l'entraînement motorisé, de préférence en directions de opposées autour de leur axe longitudinal respectif (14).

6. Dispositif de soudage par points selon la revendication 1 ou l'une des revendications 2 à 4 **caractérisé en ce qu'**au moins l'une des deux coiffes (3, 16) et/ou la tige (2, 15) peuvent tourner selon un angle aigu compris entre plus de zéro degré et 15 degrés, de préférence en directions opposées, autour de leur propre axe longitudinal (14) sous l'action d'un entraînement motorisé.

7. Dispositif de soudage par points selon la revendication 1 ou l'une des revendications 2 à 6, **caractérisé en ce que** l'entraînement rotatif de la coiffe (3) et/ou de l'arbre (2) est généré par une unité (6) à vérin et cylindre à mettre des deux côtés en alternance sous la pression d'un fluide, en particulier sous pression pneumatique ou hydraulique, unité qui est affectée à la tige (2) ou à un bras (1) contre lequel la tige (2) est agencée, et **en ce que** via un composant (11a), la tige (2, 15) ou la coiffe (3, 16) peut tourner en directions opposées (A ou B) selon un angle aigu, par exemple de moins de 20 degrés.

8. Dispositif de soudage par points selon la revendication 1 ou l'une des revendications 2 à 7, **caractérisé en ce qu'**au boîtier de la tige (15) ou de la coiffe (16) est affecté une coulisse (25) configurée en guidage à coulisse, laquelle pilote, selon un angle de rotation aigu et avec une goupille transversale (23) configurée en goupille suiveuse de coulisse déplaçable d'un quantum limité essentiellement selon l'axe longitudinal de l'arbre (15), le mouvement rotatif de la coiffe (16) attribuée en directions opposées pour vaincre la force de rappel d'un élément (20) à ressort de compression.

9. Dispositif de soudage par points selon la revendication 8, **caractérisé en ce que** la coulisse (25) s'étend selon un angle aigu par rapport à l'axe longitudinal (26) de la tige (15) et de la coiffe (16) affectée, tandis que la goupille transversale (23) est agencée perpendiculairement à l'axe longitudinal (26) de la tige (15) et l'axe longitudinal de la coiffe (16) pour se déplacer en glissant dans la coulisse (25).

10. Dispositif de soudage par points selon la revendication 8 ou 9, **caractérisé en ce que** l'entraînement rotatif de la coiffe (16) présente un élément (20) à ressort de compression qui à une extrémité prend le cas échéant appui indirectement sur le boîtier de la tige (15) et qui à l'autre extrémité prend appui le cas échéant indirectement contre un prolongement cylindrique ou avec un composant de la coiffe (16) interagissant avec ce prolongement, sous l'exercice par exemple d'une précontrainte réglable, sachant que la coulisse (25) est agencée contre une pièce en forme de manchon agencée par filetage de vissage sur la tige (15), pièce qui forme un palier antagoniste de l'élément (20) à ressort et qui pilote la précontrainte de l'élément (20) à ressort de compression selon qu'il est plus ou moins vissé, et **en ce que** la goupille (23) suiveuse de coulisse engrène par adhérence de formes soit d'un côté soit des deux dans une coulisse (25) configurée approximativement en fente longitudinale, ce qui fait que la goupille transversale (23), au moment de poser la coiffe (16), est déplaçable pour vaincre la force de rappel de l'élément (20) à ressort de compression, sachant que sous l'effet de la coulisse (25) un mouvement rotatif de la coiffe (16) a lieu selon un angle aigu correspondant à l'angle de pas de la coulisse (25), et que lors du délestage de la coiffe (16) un mouvement de rotation en arrière, également selon un angle aigu, a lieu forcément et donc automatiquement.
